# EUROPÄISCHE PATENTSCHRIFT

(11) **EP 0 272 481 B1**
(45) Veröffentlichungstag und Bekanntmachung des Hinweises auf die Patenterteilung: **10.02.1993**
(21) Anmeldenummer: 87117351.4
(22) Anmeldetag: 25.11.1987
(51) Int. Cl.: C08F 210/16, C08F 2/34

(54) **Verfahren zum Herstellen von Randomcopolymerisaten des Propens mit anderen Monoalkenen**
Process for the manufacture of random copolymers of propylene and other mono-olefins
Procédé de préparation de copolymères non orientés de propylène et d'autres monoalcènes

(30) Priorität: 03.12.1986 DE 3641238
(43) Veröffentlichungstag der Anmeldung: 29.06.1988
(73) Patentinhaber: BASF Aktiengesellschaft, 67063 Ludwigshafen (DE)
(72) Erfinder: Gruber, Wolfgang, Dr., D-6710 Frankenthal (DE); Schweier, Guenther, Dr., D-6701 Friedelsheim (DE); Schoene, Werner, Dr., D-6905 Schriesheim (DE); Schneider, Paul, D-6701 Dannstadt-Schauernheim (DE); Kuchner, Karl, Dr., D-6702 Bad Duerkheim (DE); Huber, Karl, D-6710 Frankenthal (DE)

(56) Entgegenhaltungen:
- EP-A- 0 009 724
- EP-A- 0 016 312
- EP-A- 0 067 359
- US-A- 4 012 573
- US-A- 4 122 248
- US-A- 4 414 370

## Beschreibung

Die vorliegende Erfindung betrifft ein Verfahren zum kontinuierlichen Herstellen von Randomcopolymerisaten des Propens mit anderen Monoalkenen durch Polymerisation eines Monomerengemisches aus Propen und anderen Monoalkenen mittels eines Ziegler-Natta-Katalysatorsystems bei Temperaturen von 50 bis 80°C und Drücken von 20 bis 35 bar in der Gasphase in einem zentrischen, mit einer Froudezahl von 1 bis 3 bewegten Rührbett aus kleinteiligem Polymerisat unter Abfuhr der Polymerisationswärme durch Verdampfungskühlung, wobei man das Monomerengemisch kontinuierlich oder taktweise in die Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Monomerengemisches entspricht, (b) gasförmiges, nicht durch Polymerisation verbrauchtes Monomerengemisch aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfendem Monomerengemisch, sowie (d) die durch Polymerisation verbrauchten Monomeren durch Zufuhr von Frisch-Monomeren ersetzt.

Polymerisationsverfahren der betroffenen Art sind bekannt; hierzu kann im gegebenen Zusammenhang insbesondere auf die in den US-PS 4 012 573, 4 330 645 und 4 442 271 beschriebenen Arbeitsweisen, als exemplarischen Beispielen, verwiesen werden.

Will man mit derartigen Verfahren verarbeitungstechnisch gut geeignete Randomcopolymerisate des Propens herstellen, insbesondere solche, die einerseits als Comonomereinheiten Einheiten des Ethens eingebaut enthalten und andererseits sich thermisch bzw. thermisch-peroxidisch problemlos abbauen lassen zu - von der Anwendungstechnik bekanntlich gefragten - Formmassen, die relativ tiefe Schmelztemperaturen haben, so stößt man auf Schwierigkeiten: Erhöht man im zu polymerisierenden Monomerengemisch die Konzentration an Ethen, um im Polymerisat die Menge an eingebauten Etheneinheiten anzuheben und hierdurch die thermisch-verarbeitungstechnischen Eigenschaften des Polymerisats im erwünschten Maß zu erreichen, so entsteht mit steigender Konzentration an monomerem Ethen zugleich ein morphologisch zunehmend unbefriedigendes, weil grobteilig bis brockig durchsetztes, Polymerisat.

Man weiß, daß sich diese Schwierigkeiten vermeiden oder stark vermindern ließen, wenn es gelänge, in den Randomcopolymerisaten zwischen Propeneinheiten die Etheneinheiten einzeln, d.h. "isoliert", einzubauen und nicht - wie bisher sich ergebend - überwiegend in Form kürzerer oder längerer Ketten aus Etheneinheiten: Es würde dann ein an Ethen relativ armes Monomerengemisch ausreichen, um Polymerisate zu erhalten, deren thermischverarbeitungstechnische Eigenschaften wünschenswert gut sind.

Hier setzt die Aufgabe an, die zur vorliegenden Erfindung geführt hat: Das Verfahren der eingangs definierten Art so auszugestalten, daß Randomcopolymerisate erhalten werden, bei denen die Relation Zahl der im Polymerisat insgesamt eingebauten Etheneinheiten/Zahl der im Polymerisat isoliert eingebauten Etheneinheiten dem Wert 1 möglichst nahekommt; - d.h. für die Praxis gesprochen, unterhalb von 1,6, und insbesondere unterhalb von 1,35 zu liegen kommt (Messung: ¹³C-NMR-Methode).

Es wurde gefunden, daß diese Aufgabe gelöst werden kann, wenn man - bei Einsatz eines Monomerengemischs, das neben Propen relativ geringe Mengen Ethen und relativ sehr geringe Mengen Wasserstoff (als Molekulargewichtsregler) enthält - die Verweilzeit des Monomerengemischs in der Polymerisationszone relativ sehr kurz hält.

Es wurde ferner gefunden, daß es sich beim Herstellen von einschlägigen Randomcopolymerisaten, die sich thermisch bzw. thermisch-peroxidisch problemlos abbauen lassen sollen zu Formmassen, deren Schmelztemperatur besonders tief liegt, empfiehlt, ein Monomerengemisch einzusetzen, das neben Propen, Ethen und Wasserstoff zusätzlich noch relativ geringe Mengen Buten-1 enthält.

Schließlich wurde gefunden, daß die erfindungsgemäß gestellte Aufgabe mit besonderem Erfolg gelöst werden kann, wenn man zur Polymerisation ein speziell ausgewähltes Ziegler-Natta-Katalysatorsystem einsetzt.

Gegenstand der vorliegenden Erfindung ist dementsprechend ein Verfahren zum kontinuierlichen Herstellen von Randomcopolymerisaten des Propens mit anderen Monoalkenen durch Polymerisation eines Monomerengemisches aus Propen und anderen Monoalkenen mittels eines Ziegler-Natta-Katalysatorsystems bei Temperaturen von 50 bis 80, insbesondere 60 bis 75°C und Drücken von 20 bis 35, insbesondere 25 bis 30 bar in der Gasphase in einem zentrischen, mit einer Froudezahl von 1 bis 3 bewegten Rührbett aus kleinteiligem Polymerisat unter Abfuhr der Polymerisationswärme durch Verdampfungskühlung, wobei man das Monomerengemisch kontinuierlich oder taktweise in die Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Monomerengemisches entspricht, (b) gasförmiges, nicht durch Polymerisation verbrauchtes Monomerengemisch aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfendem Monomerengemisch, sowie (d) die durch Polymerisation verbrauchten Monomeren durch Zufuhr von Frisch-Monomeren ersetzt.

Das erfindungsgemäße Verfahren ist dadurch gekennzeichnet, daß - unter Einsatz eines Monomerengemisches, welches auf 100 Molteile Propen 0,5 bis 3,5, insbesondere 1,0 bis 3,0 Molteile Ethen und 0,2 bis 1,0, insbesondere 0,2 bis 0,5 Molteile Wasserstoff enthält - die Verweilzeit des Monomerengemisches in der Polymerisationszone auf 0,5 bis 8, insbesondere 1 bis 4 Minuten gehalten wird.

Eine besondere Variante des erfindungsgemäßen Verfahrens ist dadurch gekennzeichnet, daß - unter Einsatz eines Monomerengemisches, welches auf 100 Molteile Propen 0,5 bis 3,5, insbesondere 1,0 bis 3,0 Molteile Ethen und 0,2 bis 1,0, insbesondere 0,2 bis 0,5 Molteile Wasserstoff sowie 0,5 bis 5,0, insbesondere 2,5 bis 4,5 Molteile Buten-1 enthält - die Verweilzeit des Monomerengemisches in der Polymerisationszone auf 0,5 bis 8, insbesondere 1 bis 4 Minuten gehalten wird.

Eine besonders erfolgreiche Variante des erfindungsgemäßen Verfahrens ist zusätzlich zu den anderen kennzeichnenden Maßgaben noch dadurch gekennzeichnet, daß zur Polymerisation eingesetzt wird ein Ziegler-Natta-Katalysatorsystem aus
(1) einem Titanhalogenid der Formel

   TiCl₃ · m AlCl₃

   worin m steht für eine Zahl von 0,28 bis 0,36,
(2) einer Sauerstoffverbindung der Formel 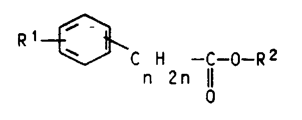 worin stehen
   - R¹: für Wasserstoff,
   - R²: für eine n-Propyl-, i-Butyl- oder n-Butylgruppe, insbesondere die n-Propylgruppe- und
   - n: für die Zahl 0, 1 oder 2, insbesondere die Zahl 0,
(3) einem Aluminiumalkyl der Formel 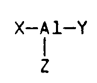 worin stehen
   - X: sowie
   - Y: für eine Ethyl- oder n-Propylgruppe, und
   - Z: für Chlor,
   sowie
(4) einem phenolischen Stoff der Formel 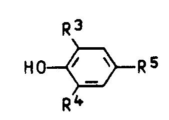 worin stehen
   - R³: sowie
   - R⁴: für eine tert.-Butylgruppe, und
   - R⁵: für einen insgesamt 19 bis 23, insbesondere 21 Kohlenstoffatome sowie eine Estergruppe aufweisenden gesättigten Kohlenwasserstoffrest der Formel

   -CH₂-CH₂-CO-O-n-Alkyl,

   mit den Maßgaben, daß (i) das Molverhältnis Titanhalogenid (1) : Sauerstoffverbindung (2) im Bereich von 1:1 bis 1:0,1 liegt, (ii) das Molverhältnis Titanhalogenid (1) : Aluminiumalkyl (3) 1:2 bis 1:10 beträgt, (iii) das Molverhältnis Aluminiumalkyl (3) : phenolischer Stoff (4) einen Wert von 1:0,2 bis 1:0,025 hat, und (iiii) das Titanhalogenid (1) und die Sauerstoffverbindung (2) vor ihrem Einsatz miteinander vermahlen worden sind.

Dieses Ziegler-Natta-Katalysatorsystem für sich allein genommen ist nicht Gegenstand der vorliegenden Erfindung; es ist bekannt aus und im Detail beschrieben in der US-PS 4 260 710, womit sich an dieser Stelle eine nähere Erläuterung des Systems erübrigt.

Das erfindungsgemäße Verfahren macht es möglich, daß Randomcopolymerisate erhalten werden, bei denen die Relation Zahl der im Polymerisat insgesamt eingebauten Etheneinheiten/Zahl der im Polymerisat isoliert eingebauten Etheneinheiten dem Wert 1 wünschenswert nahekommt; - das Verfahren gestattet es damit, ohne Schwierigkeiten Polymerisate zu erzeugen, die die thermisch-verarbeitungstechnisch gewünschten Eigenschaften aufweisen.

Darüber hinaus ist das erfindungsgemäße Verfahren durch weitere positive Aspekte ausgezeichnet: Es erlaubt es - unter Ausnutzung der hohen Produktivität des Katalysatorsystems - Randomcopolymerisate herzustellen, die relativ geringe mit Xylol extrahierbare Anteile enthalten, eine hohe Kälteschlagzähigkeit aufweisen und sich - als ein besonderer Vorteil -gut thermisch sowie thermisch-peroxidisch (so z.B. nach dem in der GB-PS 1 043 082 beschriebenen Verfahren) zu relativ tief-schmelzenden Formmassen abbauen lassen, aus denen - z.B. - Folien erhältlich sind, die durch hohe Transparenz sowie einen breiten und niedrigen Bereich der Verschweißungstemperatur ausgezeichnet sind.

Zur Durchführung des erfindungsgemäßen Verfahrens ist im einzelnen noch das Nachstehende zu bemerken:

### A) Verfahrenstechnische Seite

Die verfahrenstechnische Seite ist - abgesehen von der unten aufgeführten Besonderheit - die einschlägig übliche und als solche mit keiner eigenen Problematik verbunden. Anstelle näherer Ausführungen hierzu kann daher auf die aus der Literatur und Praxis bekannt gewordenen Arbeitsweisen verwiesen werden, insbesondere auf die Arbeitsweisen, die in den - eingangs bereits zitierten - US-PS 4 012 573, 4 330 645 und 4 442 271 beschrieben sind. Diese Arbeitsweisen haben sich im gegebenen Zusammenhang als besonders geeignet erwiesen.

Die für das erfindungsgemäße Verfahren kennzeichnende - und für seinen Erfolg bestimmende - verfahrenstechnische Besonderheit besteht darin, daß die Verweilzeit des Monomerengemisches in der Polymerisationszone auf 0,5 bis 8, insbesondere 1 bis 4 Minuten gehalten wird und damit unüblich kurz ist.

Hat man die anderweitigen gewünschten Verfahrensbedingungen vorgegegeben, so läßt sich die erfindungsgemäß einzuhaltende Verweilzeit leicht durch Änderungen in der Zugabegeschwindigkeit, d.h. der Zugabemenge pro Zeiteinheit, des Katalysatorsystems auf einen optimalen Wert bringen.

### B) Stoffliche Seite

Auch die stofflich-quantitative Seite ist - soweit die Monomeren, d.h. Propen, Ethen und gegebenenfalls Buten-1 sowie der Wasserstoff als Molekulargewichtsregler betroffen sind - die einschlägig übliche und insoweit, d.h. qualitativ, mit keinen Besonderheiten verbunden.

Erfindungsgemäß kennzeichnend und erfolgbestimmend ist hingegen die quantitative Seite, nämlich, daß eingesetzt wird ein Monomerengemisch, welches auf 100 Molteile Propen 0,5 bis 3,5, insbesondere 1,0 bis 3,0 Molteile Ethen und 0,2 bis 1,0, insbesondere 0,2 bis 0,5 Molteile Wasserstoff enthält, oder ein Monomerengemisch, welches auf 100 Molteile Propen 0,5 bis 3,5, insbesondere 1,0 bis 3,0 Molteile Ethen und 0,2 bis 1,0, insbesondere 0,2 bis 0,5 Molteile Wasserstoff sowie 0,5 bis 5,0, insbesondere 2,5 bis 4,5 Molteile Buten-1 enthält.

Hervorzuheben ist ferner, daß das erfindungsgemäße Verfahren mit besonderem Erfolg durchgeführt werden kann, wenn man zur Polymerisation ein spezielles Ziegler-Natta-Katalysatorsystem einsetzt, nämlich ein solches, das besteht aus
(1) einem bestimmten - oben näher definierten - Titanhalogenid,
(2) einer bestimmten - oben näher definierten - Sauerstoffverbindung,
(3) einem bestimmten - oben näher definierten - Aluminiumalkyl, sowie
(4) einem bestimmten - oben näher definierten - phenolischen Stoff,
mit der Maßgabe, daß das Titanhalogenid (1) und die Sauerstoffverbindung (2) vor ihrem Einsatz miteinander vermahlen worden sind.

Mit den oben definierten, stofflich strickt begrenzten Komponenten (1), (2), (3) und (4) ist das im Rahmen des erfindungsgemäßen Verfahrens zu besonderem Erfolg führende Katalysatorsystem eine besondere und auf eben dieses Verfahren bezogene Auswahl aus dem erheblich breiteren, in der - oben bereits zitierten -US-PS 4 260 710 eingehend beschriebenen Katalysatorsystem.

### Beispiel 1

### Katalysatorsystem

Ausgangsstoffe des Katalysatorsystems sind
(1) ein Titanhalogenid der Formel TiCl₃ · 0,33 AlCl₃,
(2) Benzoesäure-n-propylester als Sauerstoffverbindung,
(3) Diethylaluminiumchlorid als Aluminiumalkyl, und
(4) n-Octadecyl-β-(4'-hydroxy-3',5'-di-tert.-butylphenyl)-propionat als phenolischer Stoff.

Das Titanhalogenid (1) und die Sauerstoffverbindung (2) sind im Molverhältnis von 1:0,3 vor ihrem Einsatz in einer Kugelschwingmühle über eine Zeitspanne von 45 Stunden bei einer Temperatur von 22°C unter einer Mahlbeschleunigung von 50 m·sec⁻² in Abwesenheit von Verdünnungsmitteln miteinander vermahlen worden.

Zur Polymerisation werden eingesetzt soviel des Vermahlungsprodukts aus den Komponenten (1)/(2), daß das Molverhältnis Titanhalogenid (1) : Aluminiumalkyl (3) 1:6 beträgt und soviel der Katalysatorkomponente (4), daß das Molverhältnis Aluminiumalkyl (3) : phenolischem Stoff (4) den Wert 1:0,042 hat.

### Polymerisation

Sie erfolgt wie in Beispiel 1 der US-PS 4 330 645 mit den folgenden Abwandlungen:
Es wird ein Randomcopolymerisat unter Einsatz eines Monomerengemischs hergestellt, welches auf 100 Molteile Propen 1,1 Molteile Ethen und 0,3 Molteile Wasserstoff enthält.

Es wird bei einer Temperatur von 70°C und einem Druck von 28 bar polymerisiert.

Es wird das vorstehend beschriebene Ziegler-Natta-Katalysatorsystem eingesetzt in einer Menge - gerechnet als und bezogen auf das Titanhalogenid (1) - von 1,1 Mol/Stunde.

Die Rührgeschwindigkeit wird so gewählt, daß das Rührbett mit einer Froudezahl von 2,2 bewegt wird.

Die Verweilzeit des Monomerengemisches in der Polymerisationszone wird auf 3,8 Minuten gehalten.

Im kontinuierlich-stationären Betrieb entstehen so 2070 kg/h eines Randomcopolymerisats, bei dem die - nach der ¹³C-NMR-Methode gemessene -Relation Zahl der im Polymerisat insgesamt eingebauten Etheneinheiten/Zahl der im Polymerisat isoliert eingebauten Etheneinheiten den Wert 1,04 hat; die Polymerisation verläuft auch über einen langen Zeitraum ohne Bildung von grobteilig oder brockig durchsetztem Polymerisat.

Das erhaltene Randomcopolymerisat hat einen mit Xylol extrahierbaren Anteil von 4,3 Gew.%, eine Kälteschlagzähigkeit (nach DIN 53 453 bei 0°C) von 0 % Bruch und läßt sich gut thermisch zu einem Produkt mit einer Schmelztemperatur von - z.B. - 140°C abbauen, aus dem sich Folien mit vorteilhaften Eigenschaften, insbesondere hinsichtlich Transparenz und Verschweißbarkeit, herstellen lassen.

### Beispiel 2

### Katalysatorsystem

Die Komponenten des Katalysatorsystems sind die gleichen wie in Beispiel 1.

Zur Polymerisation werden eingesetzt soviel des Vermahlungsprodukts aus den Komponenten (1)/(2), daß das Molverhältnis Titanhalogenid (1) : Aluminiumalkyl (3) 1:5 beträgt und soviel der Katalysatorkomponente (4), daß das Molverhältnis Aluminiumalkyl (3) : phenolischem Stoff (4) den Wert 1:0,05 hat.

### Polymerisation

Sie erfolgt ebenfalls wie in Beispiel 1 der US-PS 4 330 645, jedoch mit den folgenden Abwandlungen:
Es wird ein Randomcopolymerisat unter Einsatz eines Monomerengemischs hergestellt, welches auf 100 Molteile Propen 2,7 Molteile Ethen und 0,4 Molteile Wasserstoff sowie 3,9 Molteile Buten-1 enthält.

Es wird bei einer Temperatur von 65°C und einem Druck von 20 bar polymerisiert.

Es wird das vorstehend beschriebene Ziegler-Natta-Katalysatorsystem eingesetzt in einer Menge - gerechnet als und bezogen auf das Titanhalogenid (1) - von 1,5 Mol/Stunde.

Die Rührgeschwindigkeit wird so gewählt, daß das Rührbett mit einer Froudezahl von 1,7 bewegt wird.

Die Verweilzeit des Monomerengemisches in der Polymerisationszone wird auf 2,4 Minuten gehalten.

Im kontinuierlich-stationären Betrieb entstehen so 2020 kg/h eines Randomcopolymerisats, bei dem die - nach der ¹³C-NMR-Methode gemessene -Relation Zahl der im Polymerisat insgesamt eingebauten Etheneinheiten/Zahl der im Polymerisat isoliert eingebauten Etheneinheiten den Wert 1,25 hat; die Polymerisation verläuft auch hier über einen langen Zeitraum ohne Bildung von grobteilig oder brockig durchsetztem Polymerisat.

Das erhaltene Randomcopolymerisat hat einen mit Xylol extrahierbaren Anteil von 16 Gew.%, eine Kälteschlagzähigkeit (nach DIN 53 453 bei 0°C) von 0 % Bruch und läßt sich gut thermisch-peroxidisch zu einem Produkt mit einer Schmelztemperatur von - z.B. - 120°C abbauen, aus dem sich ebenfalls Folien mit vorteilhaften Eigenschaften, insbesondere hinsichtlich Transparenz und - vor allem - Verschweißbarkeit, herstellen lassen.

## Patentansprüche

1. Verfahren zum kontinuierlichen Herstellen von Randomcopolymerisaten des Propens mit anderen Monoalkenen durch Polymerisation eines Monomerengemisches aus Propen und anderen Monoalkenen mittels eines Ziegler-Natta-Katalysatorsystems bei Temperaturen von 50 bis 80°C und Drücken von 20 bis 35 bar in der Gasphase in einem zentrischen, mit einer Froudezahl von 1 bis 3 bewegten Rührbett aus kleinteiligem Polymerisat unter Abfuhr der Polymerisationswärme durch Verdampfungskühlung, wobei man das Monomerengemisch kontinuierlich oder taktweise in die Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Monomerengemisches entspricht, (b) gasförmiges, nicht durch Polymerisation verbrauchtes Monomerengemisch aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfendem Monomerengemisch, sowie (d) die durch Polymerisation verbrauchten Monomeren durch Zufuhr von Frisch-Monomeren ersetzt, dadurch gekennzeichnet, daß - unter Einsatz eines Monomerengemisches, welches auf 100 Molteile Propen 0,5 bis 3,5 Molteile Ethen und 0,2 bis 1,0 Molteile Wasserstoff enthält - die Verweilzeit des Monomerengemisches in der Polymerisationszone auf 0,5 bis 8 Minuten gehalten wird.

## Claims

1. A process for the continuous preparation of random copolymers of propene with other monoalkenes by polymerization of a monomer mixture of propene and other monoalkenes using a Ziegler-Natta catalyst system at from 50 to 80°C and under from 20 to 35 bar in the gas phase in a centric stirred bed agitated at a Fronde number of from 1 to 3 and consisting of finely divided polymer, with removal of the heat of polymerization by evaporative cooling, the monomer mixture being introduced continuously or periodically into the polymerization zone and the polymer being discharged continuously or periodically from the polymerization zone, with the provisos that (1) in the polymerization zone the pressure and the temperature are maintained in a range which corresponds to the gaseous state of the monomer mixture, (b) gaseous monomer mixture not consumed by polymerization is discharged from the polymerization zone, liquefied, stored, and reintroduced in liquid form into the polymerization zone, (c) the temperature in the polymerization zone is controlled by continuously measuring the temperature and, where the temperature changes, a consequent change in the amount of liquid monomer mixture introduced per unit time, the said monomer mixture vaporizing in the reaction zone, and (d) the monomers consumed by polymerization are replaced by feeding in fresh monomers, wherein, using a monomer mixture which contains from 0.5 to 3.5 molar parts of ethene and from 0.2 to 1.0 molar part of hydrogen per 100 molar parts of propane, the residence time of the monomer mixture in the polymerization zone is kept at from 0.5 to 8 minutes.

## Revendications

1. Procédé de préparation en continu de copolymères statistiques ou stochastiques du propène avec d'autres monoalcènes, par la polymérisation d'un mélange de monomères formé de propène et d'autres monoalcènes, à l'aide d'un système catalytique de Zigler-Natta, à des températures de 50 à 80°C et des pressions de 20 à 35 bars, en phase gazeuse, dans un lit agité, mobilisé avec un indice de Froude de 1 à 3, de polymère finement divisé, avec évacuation de la chaleur de polymérisation par refroidissement par évaporation, où on introduit le mélange des monomères en continu ou par fractions dans la zone de polymérisation et on évacue le polymère en continu ou par fractions de la zone de polymérisation, avec les conditions que (a) on maintienne dans la zone de polymérisation la pression et la température dans une plage correspondant à l'état gazeux du mélange des monomères, (b) on évacue de la zone de polymérisation, liquéfie et conserve le mélange des monomères non consommé par la polymérisation et le réintroduise à l'état liquide dans la zone de polymérisation, (c) on règle la température dans la zone de polymérisation par mesure permanente de la température et on remplace, par addition de monomères frais, une variation provoquée de ce fait par une modification de la température de la masse de mélange de monomères liquide et s'évaporant dans la zone de réaction, introduite par unité de temps, comme aussi (d) les monomères consommés par polymérisation, caractérisé en ce que - sous un introduction d'un mélange de monomères qui contient de 0,5 à 3,5 parties molaires d'éthène et de 0,2 à 1,0 partie molaire d'hydrogène pour 100 parties molaires de propène - la durée de séjour du mélange des monomères dans la zone de polymérisation est maintenue entre 0,5 et 8 minutes.
